# EUROPÄISCHE PATENTANMELDUNG

(11) **EP 4 711 063 A1**
(43) Veröffentlichungstag der Anmeldung: **18.03.2026**
(21) Anmeldenummer: 25198979.4
(22) Anmeldetag: 29.08.2025
(51) Int. Cl.: B23B 31/14, B23B 31/175

(54) **SPANNFUTTER FÜR WERKSTÜCKE, INSBESONDERE EISENBAHNRÄDER**

(30) Priorität: 10.09.2024 DE 102024125995
(71) Anmelder: Nagel Werkzeug- und Vorrichtungsbau GmbH, 73333 Gingen (DE)
(72) Erfinder: Lang, Martin, 73333 Gingen/Fils (DE); Schuster, Werner, 73333 Gingen/Fils (DE); Ziegler, Martin, 73333 Gingen/Fils (DE)
(74) Vertreter: Patentanwälte Bregenzer und Reule Partnerschaftsgesellschaft mbB

(57) **Zusammenfassung**

Die Erfindung betrifft ein Spannfutter (10) mit einem Futterkörper (11), der eine zur Verbindung mit einem Drehantrieb (91) einer Bearbeitungsmaschine (90) vorgesehene Antriebsseite (12) und eine zur Anordnung eines Werkstücks (100) vorgesehene Werkstückseite (13) aufweist, wobei das Spannfutter (10) eine Spanneinrichtung (30) mit zwischen einer Spannstellung (SP), in der die Spanneinrichtung das Werkstück an dem Spannfutter (10) verspannt, und einer Lösestellung (LP), in der die Spanneinrichtung das Werkstück freigibt, verstellbaren Backen (31-33) aufweist, die an an der Werkstückseite in Winkelabständen um die Längsachse (L) angeordneten Backenführungen (40) zwischen der Lösestellung und der Spannstellung (SP) geführt sind und durch einen von der Antriebsseite (12) her antreibbaren Spannantriebskörper (34) zwischen der Lösestellung und der Spannstellung (SP) antreibbar sind, wobei zwischen einem jeweiligen Backen und dem Spannantriebskörper ein Hebelgetriebe (50) angeordnet ist, welches eine Antriebsbewegung des Spannantriebskörpers in eine Spannbewegung des jeweiligen Backens zwischen der Lösestellung und der Spannstellung (SP) überträgt, wobei ein jeweiliges Hebelgetriebe (50) einen Spannhebel (51) umfasst, der in einer Hebelaufnahme (15) des Futterkörpers (11) aufgenommen und anhand eines an der Hebelaufnahme angeordneten Hebel-Schwenklagers (54) schwenkbar gelagert ist, das zwischen einem mit dem Spannantriebskörper gekoppelten Antriebsarm (52) des Spannhebels und einem mit dem Backen gekoppelten Abtriebsarm (53) des Spannhebels angeordnet ist. Die Hebelaufnahme weist eine an der Werkstückseite und/oder einem sich um die Längsachse (L) erstreckenden Außenumfang (14) des Futterkörpers (11) angeordnete Hebel-Montageöffnung (17) auf, durch die der Spannhebel in die Hebelaufnahme einführbar und in der Hebelaufnahme montierbar ist.

## Beschreibung

Die Erfindung betrifft ein Spannfutter mit einem Futterkörper, der eine zur Verbindung mit einem Drehantrieb einer Bearbeitungsmaschine vorgesehene Antriebsseite und eine zur Anordnung eines Werkstücks, insbesondere eines Eisenbahnrads, vorgesehene Werkstückseite aufweist, wobei die Antriebsseite und die Werkstückseite in Bezug auf eine Längsachse an einander entgegengesetzten Seiten des Futterkörpers angeordnet sind, wobei die Längsachse einer Drehachse entspricht, um die das Spannfutter durch den Drehantrieb antreibbar ist, wobei das Spannfutter eine Spanneinrichtung mit zwischen einer Spannstellung, in der die Spanneinrichtung das Werkstück an dem Spannfutter verspannt, und Lösestellung, in der die Spanneinrichtung das Werkstück freigibt, verstellbaren Backen aufweist, die an an der Werkstückseite in vorzugsweise gleichen Winkelabständen um die Längsachse angeordneten Backenführungen zwischen der Lösestellung und der Spannstellung geführt sind und durch einen von der Antriebsseite her antreibbaren Spannantriebskörper zwischen der Lösestellung und der Spannstellung antreibbar sind, wobei zwischen einem jeweiligen Backen und dem Spannantriebskörper ein Hebelgetriebe angeordnet ist, welches eine Antriebsbewegung des Spannantriebskörpers in eine Spannbewegung des jeweiligen Backens zwischen der Lösestellung und der Spannstellung überträgt, wobei ein jeweiliges Hebelgetriebe einen Spannhebel umfasst, der in einer Hebelaufnahme des Futterkörpers aufgenommen und anhand eines an der Hebelaufnahme angeordneten Hebel-Schwenklagers schwenkbar gelagert ist, das zwischen einem mit dem Spannantriebskörper gekoppelten Antriebsarm des Spannhebels und einem mit dem Backen gekoppelten Abtriebsarm des Spannhebels angeordnet ist.

Zur spanenden Bearbeitung von Eisenbahnrädern sind derartige Spannfutter üblich. Ein solches Spannfutter weist eine Spanneinrichtung mit einer Backenanordnung auf, die mehrere in Bezug die Drehachse des Spannfutters oder die Längsachse des Spannfutters in Winkelabständen angeordnete Backen umfasst. Die Backen sind vom radialen Außenumfang her an das Werkstück, beispielsweise das Eisenbahnrad heranführbar und verspannen das Werkstück oder Eisenbahnrad. So dann kann eine spanende Bearbeitung beginnen, die sich beispielsweise vom Spurkranz bis zu einer Flachseite oder Stirnseite des Eisenbahnrads bis schließlich zu dessen Nabenöffnung für die Achswelle erstreckt. Das Eisenbahnrad oder Werkstück kann vorteilhaft umgesetzt werden, so dass die bearbeitete Stirnseite oder Flachseite des Eisenbahnrads zur Werkstückseite des Spannfutters orientiert ist, wobei dann die Laufflächen, die noch unbearbeitete Flachseite oder Stirnseite des Eisenbahnrads oder Werkstücks und schließlich nochmals die Nabenöffnung bearbeitet werden. Die Bearbeitung beginnt regelmäßig an der Lauffläche des Rads und endet an der Nabe oder umgekehrt.

Ein Eisenbahnrad weist eine große Masse auf, weshalb das Spannfutter und insbesondere dessen Futterkörper massiv ausgestaltet werden müssen. Bewegliche Komponenten am Spannfutter, so z.B. die Komponenten der Spanneinrichtung, bedürfen jedoch Aussparungen, Vertiefungen oder dergleichen, beispielsweise für Spannhebel. Zudem müssen Montageöffnungen zur Montage der beweglichen Komponenten des Spannfutters vorgesehen werden, die den Futterkörper schwächen. Dementsprechend müssen Verstärkungsmaßnahme am Futterkörper getroffen werden. Beispielsweise ist es üblich, das Spannfutter mehrteilig auszugestalten, d.h. dass zwischen dem Futterkörper und einem Abtrieb der Bearbeitungsmaschine ein Zwischenkörper oder Flanschkörper vorgesehen ist, der einen Bestandteil des Spannfutters bildet und Montageöffnungen für die beweglichen Komponenten der Spanneinrichtung abdeckt. Der Aufbau ist kompliziert und aufwändig.

Es ist daher die Aufgabe der vorliegenden Erfindung, ein verbessertes Spannfutter für insbesondere Eisenbahnräder oder dergleichen andere große Werkstücke bereitzustellen.

Zur Lösung der Aufgabe ist bei einem Spannfutter der eingangs genannten Art vorgesehen, dass die Hebelaufnahme eine an der Werkstückseite und/oder einem sich um die Längsachse erstreckenden Außenumfang des Futterkörpers angeordnete Hebel-Montageöffnung aufweist, durch die der Spannhebel in die Hebelaufnahme einführbar und in der Hebelaufnahme montierbar ist.

Es ist ein Grundgedanke der vorliegenden Erfindung, dass das Spannfutter nicht von der Antriebsseite her durch Montageöffnungen oder dergleichen geschwächt ist, sondern dort möglichst unbeeinträchtigt und massiv ist. Insbesondere sind die für die Montage der Spannhebel notwendigen Öffnungen anders als beim Stand der Technik nicht mehr an der Maschine zugewandten Seite des Spannfutters, der Antriebsseite, angeordnet, sondern abseits davon. Grundsätzlich ist es möglich, dass beispielsweise am Außenumfang eine Hebel-Montageöffnung für einen jeweiligen Spannhebel vorgesehen ist. Es ist aber bevorzugt, wenn die Hebel-Montageöffnung der Hebelaufnahme an der Werkstückseite oder Bearbeitungsseite des Spannfutters, also beispielsweise an der Stirnseite des Spannfutters vorgesehen ist.

Die Hebelaufnahmen sind beispielsweise in der Art von Schlitzen und/oder Aufnahmetasche ausgestaltet. Die Hebelaufnahmen weisen vorzugsweise eine schmale Gestalt auf, wobei sich einander gegenüberliegende Wände der Hebelaufnahmen beispielsweise winkelig oder rechtwinkelig zur Werkstückseite und/oder dem Außenumfang erstrecken. Die Wände können beispielsweise bis zur Werkstückseite und/oder bis zum Außenumfang verlaufen, wo sie die Hebel-Montageöffnung begrenzen. Eine Hebel-Montageöffnung kann in einer Ausgestaltung der Erfindung einen Abschnitt am Außenumfang und einen Abschnitt an der Werkstückseite umfassen. Eine Hebel-Montageöffnung kann sich beispielsweise über einen Kantenbereich, beispielsweise über eine Ringkante, zwischen der Werkstückseite und dem Außenumfang erstrecken. Die Hebel-Montageöffnung kann aber auch ausschließlich am Außenumfang oder ausschließlich an der Werkstückseite angeordnet sein.

Vorteilhaft sind mehrere Backen, beispielsweise drei oder vier Backen. Eine besonders bevorzugte Ausführungsform sieht vor, dass exakt drei Backen bei der Spanneinrichtung vorhanden sind. Eine Backenanordnung der Spanneinrichtung umfasst also beispielsweise mindestens zwei, vorzugsweise mindestens drei oder exakt drei Backen.

Die Spanneinrichtung ist vorzugsweise eine Spanneinrichtung zum einem in Bezug auf die Drehachse oder Längsachse außenseitigen Spannen des Werkstücks. Es ist auch möglich, dass die Spanneinrichtung zu einem innenseitigen Spannen des Werkstücks ausgestaltet ist. Bei dem außenseitigen Spannen des Werkstücks werden die Backen aus der Lösestellung in die Spannstellung nach radial innen in Bezug auf die Drehachse verstellt und bei dem innenseitigen Spannen des Werkstücks werden die Backen in Bezug auf die Drehachse nach radial außen aus der Lösestellung in die Spannstellung verstellt.

Die Backen sind vorzugsweise synchron durch den Spannantriebskörper betätigbar. Mithin ist es vorteilhaft, wenn ein einziger Spannantriebskörper alle Backen über ein Hebelgetriebe antreibt.

Wenn also in der nachfolgenden Beschreibung von einer Ausführungsform in Bezug auf einen Backen die Rede ist, zum Beispiel von einer Lageraufnahme, einem Spannhebel oder dergleichen, gilt diese Ausführungsform vorteilhaft für alle Backen.

Vorteilhaft weisen mehrere oder alle Hebelaufnahmen eine Hebel-Montageöffnung an der Werkstückseite oder dem Außenumfang des Futterkörpers auf.

Ein jeweiliger Backen weist vorzugsweise einen Grundbacken auf, der am Spannfutter anhand der Backenführung beweglich gelagert ist. Die Backenführung umfasst beispielsweise Führungsschienen oder Führungskonturen, entlang derer der jeweilige Backen beweglich ist.

Es ist möglich, dass ein Backen einstückig ist und Haltekonturen für das Werkstück und/oder eine Werkstückhalterung aufweist.

Es ist auch möglich, dass ein Backen einen Grundbacken aufweist oder durch einen Grundbacken gebildet ist, der eine Halterung für eine Werkstückhalterung aufweist.

Ein Backen kann z.B. mehrteilig sein, also beispielsweise einen Grundbacken und eine Werkstückhalterung und/oder einen Backenaufsatz und/oder Haltebacken aufweisen. Ein Grundbacken eines Backens kann beispielsweise eine Halterung oder eine Aufnahme zur Aufnahme oder zum Halten eines Werkstückhaltekörpers oder Haltebackens aufweisen. Der Werkstückhaltekörper oder Haltebacken kann vorzugsweise lösbar an der Halterung des Grundbackens befestigt sein.

Die Werkstückhalterung ist vorzugsweise derart ausgestaltet, dass sie das Werkstück von an einander entgegengesetzten Seiten des Werkstücks her halten kann. Mithin ist also beispielsweise das Eisenbahnrad umsetzbar. Die Werkstückhalterung weist also beispielsweise erste Haltekonturen zum Halten des Werkstücks oder Eisenbahnrads in einer ersten Stellung auf, bei der eine erste Stirnseite des Werkstücks oder Eisenbahnrads der Werkstückseite des Spannfutters zugewandt ist, sowie zweite Werkstückhaltekonturen zum Halten des Werkstücks in einer zweiten Stellung, bei der eine zu der ersten Seite entgegengesetzte oder von der ersten Seite abgewandte zweite Seite des Werkstücks der Werkstückseite des Spannfutters zugewandt oder zugeordnet ist.

Die Hebel-Montageöffnung und die Hebelaufnahme kommunizieren insoweit miteinander, dass der Spannhebel in die Hebelaufnahme durch die Hebel-Montageöffnung hindurch einführbar ist. Ein bevorzugtes Konzept sieht dabei vor, dass die Hebel-Montageöffnung an der Werkstückseite des Futterkörpers angeordnet ist.

Der Futterkörper ist vorzugsweise ein einstückiger Körper, beispielsweise aus Guss, Stahl oder dergleichen hergestellter Körper. Dementsprechend kann der Spannkörper Kräfte aufnehmen. Der Spannkörper kann Verrippungen aufweisen, insbesondere an seiner Antriebsseite.

Die Antriebsseite und die Werkstückseite sind vorzugsweise Stirnseiten oder im Wesentlichen flache Seiten des Futterkörpers. Der Außenumfang des Futterkörpers ist vorzugsweise rund. Eine Höhe des Außenumfangs des Futterkörpers ist vorzugsweise geringer als ein Durchmesser des Futterkörpers, insbesondere kleiner als ein Radius des Futterkörpers, der sich zwischen seiner Längsachse oder Drehachse und dem Außenumfang erstreckt.

An der Werkstückseite und/oder an dem Außenumfang können weitere MontageÖffnungen oder Befestigungsöffnungen vorgesehen sein, was nachfolgend deutlicher wird. Bevorzugt ist es jedoch, wenn die Antriebsseite des Futterkörpers geschlossen ist abgesehen von beispielsweise einer Antriebsaufnahme für einen nachfolgend noch erläuterten Spannantrieb, der Bestandteil der Spannantriebskörpers sein kann oder der zum Antreiben des Spannantriebskörpers vorgesehen ist.

Der Spannantrieb kann ein Teil des Spannfutters sein. Es ist auch möglich, dass der Spannantrieb ein Teil der Bearbeitungsmaschine ist und mit dem Spannfutter, insbesondere mit dem Spannantriebskörper koppelbar ist.

Die Bearbeitungsmaschine ist oder umfasst z.B. eine Werkzeugmaschine. Die Bearbeitungsmaschine ist z.B. eine Drehmaschine und/oder Fräsmaschine. Die Bearbeitungsmaschine kann auch eine Drehmaschine sein, die eine Fräsfunktion aufweist. Die Bearbeitungsmaschine kann eine kombinierte Dreh- und Fräsmaschine sein.

Die Bearbeitungsmaschine umfasst beispielsweise ein Bearbeitungswerkzeug, insbesondere ein Drehwerkzeug oder einen Drehmeißel und/oder ein Fräswerkzeug, zur spanenden Bearbeitung des oder eines an dem Spannfutter gehaltenen Werkstücks.

Die Antriebsseite ist vorzugsweise als eine Maschinenschnittstelle zur unmittelbaren Befestigung an einer Drehantriebshalterung der Bearbeitungsmaschine ausgestaltet.

Die Antriebsseite kann einen Montageflansch zur Montage an der Drehantriebshalterung der Bearbeitungsmaschine aufweisen.

Die Antriebsseite weist beispielsweise einen Zentrierrand oder einen Zentrierflansch zur Zentrierung an der Drehantriebshalterung der Bearbeitungsmaschine auf.

Weiterhin ist es vorteilhaft, wenn an der Antriebsseite mindestens eine Dichtkontur zu einer abdichtenden Verbindung mit der Drehantriebshalterung der Bearbeitungsmaschine vorgesehen ist. Die mindestens eine Dichtkontur kann beispielsweise ein Bestandteil einer Labyrinth-Dichtung sein. Vorteilhaft ist mindestens ein ringförmiger Dichtrand oder mindestens eine ringförmige Dichtkontur an der Antriebsseite des Futterkörpers angeordnet. Bevorzugt sind mehrere ringförmige Dichtkonturen oder Labyrinth-Konturen, die konzentrisch um die Drehachse oder Längsachse des Futterkörpers verlaufen. In die mindestens eine ringförmige, insbesondere kreisringförmige, Dichtkontur kann beispielsweise eine Dicht-Gegenkontur der Drehantriebshalterung der Bearbeitungsmaschine eingreifen.

An der Antriebsseite können beispielsweise Rippen vorgesehen sein, z.B. Rippen in einer Orientierung und/oder oder Anordnung in der Art von radial zur Drehachse verlaufenden Speichen.

Es ist dabei ein Grundgedanke, dass die Antriebsseite zu einer direkten Montage an der Drehantriebshalterung der Bearbeitungsmaschine, beispielsweise einer Bearbeitungsspindel, ausgestaltet ist. Ein Zwischenflansch, der sozusagen zwischen dem Futterkörper und die Drehantriebshalterung zu montieren wäre, ist nicht notwendig und/oder nicht vorgesehen.

Vorteilhaft ist die Antriebsseite mit Drehmitnahmekonturen und/oder Aufnahmen für Montagebolzen oder dergleichen zur formschlüssigen und/oder drehfesten Verbindung mit der Drehantriebshalterung der Bearbeitungsmaschine ausgestattet.

Der Drehantrieb der Bearbeitungsmaschine umfasst oder ist beispielsweise eine sogenannte Antriebsspindel.

Bevorzugt ist es, wenn die Hebel-Montageöffnung an der Backenführung des jeweiligen Backens angeordnet ist. Mithin ist also die Hebel-Montageöffnung direkt neben oder sogar in oder an der Backenführung angeordnet. Eine Schwächung des Futterkörpers abseits der Backenführung ist also nicht zu befürchten. Insbesondere ist die Hebelaufnahme zur der Backenführung hin, insbesondere zu der Werkstückseite hin offen. Mithin liegt also die Hebel-Montageöffnung im jeweiligen Backen gegenüber, wenn dieser an der Backenführung angeordnet und gehalten ist.

Ein bevorzugtes Konzept sieht vor, dass die Hebel-Montageöffnung in einer Nut der Backenführung angeordnet ist, in die der Backen eingreift oder die sich zwischen Führungsschienen oder Führungskonturen der Backenführung erstreckt, wobei der Backen an den Führungsschienen oder Führungskonturen geführt ist.

Die Führungsschienen oder Führungskonturen der Backenführung bilden beispielsweise Linearführungskonturen.

Die Backenführung führt den Backen entlang einer Führungsachse, die radial zur Drehachse des Spannfutters oder Futterkörpers verläuft. Es ist grundsätzlich aber auch möglich, dass die Backenführung eine beispielsweise etwas schräg zu einer Radiuslinie, die sich von der Drehachse oder linearen Längsachse her erstreckt, verläuft.

Ein jeweiliger Spannhebel ist anhand eines Hebel-Schwenklagers an dem Spannfutter schwenkbar gelagert. Dabei ist es möglich, dass ein Lagerachskörper ortsfest am Futterkörper gehalten ist, an dem der Spannhebel schwenkbar gelagert ist. Es ist aber auch möglich, dass der Lagerachskörper schwenkbar bezüglich des Futterkörpers ist und der Spannhebel fest oder schwenkbar beweglich am Lagerachskörper angeordnet ist.

Der Lagerachskörper ist vorzugsweise unmittelbar an dem Futterkörper gehalten, beispielsweise in eine Lageraufnahme eingesteckt oder eingepresst. Im Sinne einer optimalen Maßhaltigkeit ist es möglich, dass ein Lagerachskörper in einer Lagerbuchse gehalten ist, die ihrerseits wiederum fest am Futterkörper angeordnet ist.

Insbesondere ist eine solche Lagerbuchse bei der nachfolgend erläuterten Ausführungsform vorteilhaft, bei der lange Montagekanäle möglich oder vorgesehen sind.

Einem jeweiligen Hebel-Schwenklager ist vorzugsweise ein Montagekanal zugeordnet, der sich bis zum Außenumfang des Futterkörpers erstreckt. Der Montagekanal erstreckt sich vorzugsweise parallel oder entlang einer Schwenkachse des jeweiligen Hebel-Schwenklagers. Der Montagekanal erstreckt sich bis zu einem Außenumfang des Futterkörpers, wobei der oder ein Lagerachskörper zur schwenkbaren Lagerung des Spannhebels durch den Montagkanal in den Futterkörper von dessen Außenumfang her einführbar oder eingeführt ist. Der Montagekanal kann sich also beispielsweise rechtwinklig zu einer Radiuslinie, die sich von der Drehachse des Spannfutters oder Futterkörpers erstreckt, sich bis zum Außenumfang des Futterkörpers erstrecken. Vorteilhaft ist der Montagekanal an seiner Öffnung am Außenumfang des Futterkörpers verschlossen, wenn der Lagerachskörper in den Montagekanal bzw. die Lageraufnahme des Hebel-Schwenklagers eingeführt ist, beispielsweise mit der Lageraufnahme verbunden, verpresst oder dergleichen ist.

Der Abtriebsarm des Spannhebels ist mit dem Backen vorteilhaft anhand eines Abtrieb-Schwenklagers schwenkbar und/oder eines Abtrieb-Schiebelagers verschieblich gekoppelt. Bevorzugt ist eine Kombination aus Schwenklager und Schiebelager, was nachfolgend noch deutlicher wird.

Beim Antriebsarm des Spannhebels ist es vorteilhaft, wenn er mit dem Spannantriebskörper anhand eines Antrieb-Schwenklagers schwenkbar und/oder eines Antrieb-Schiebelagers verschieblich gekoppelt ist, bevorzugt beides.

Somit kann also beispielsweise das Hebel-Schwenklager des Spannhebels ortsfest bezüglich des Futterkörpers angeordnet sein, während der Abtriebsarm und der Antriebsarm aufgrund einer Schwenk-Schiebe-Lagerung beweglich mit dem Spannantriebskörper bzw. dem Backen gekoppelt sind.

Das Antrieb-Schiebelager umfasst vorzugsweise eine an dem Spannantriebskörper in einer Antrieb-Schiebeaufnahme verschieblich aufgenommenen Schiebelagerkörper, wobei das Antrieb-Schwenklager den Schiebelagerkörper und den Antriebsarm des Spannhebels schwenkbar koppelt.

Nachfolgend werden Kombinationen einer derartiger Schiebelager und Schwenklager deutlicher:
Beispielsweise können Schiebelagerkörper, z.B. mindestens ein Gleitstein, vorgesehen sein, die am Spannantriebskörper und am Backen beweglich oder verschieblich gelagert sind. Man kann die Schiebelagerkörper auch beispielsweise als Antriebskörper bezeichnen. Bevorzugt sind die Schiebelagerkörper in der Art von Nutensteinen oder dergleichen ausgestaltet. Die Schiebelagerkörper können vorzugsweise Kräfte eines nachfolgend erläuterten Antrieb-Schwenklagers und/oder eines nachfolgend erläuterten Abtrieb-Schwenklagers optimal auf den Backen bzw. vom Spannantriebskörper auf den Spannhebel übertragen. Dabei ist eine Flächenpressung reduziert.

Ein bevorzugtes Konzept sieht vor, dass das Antrieb-Schiebelager einen an dem Spannantriebskörper in einer Antriebs-Schiebeaufnahme verschieblich aufgenommenen Antrieb-Schiebelagerkörper, beispielsweise in der Art eines Nutensteins, aufweist, wobei das Antrieb-Schwenklager den Antrieb-Schiebelagerkörper und den Antriebsarm des Spannhebels schwenkbar koppelt. Beispielsweise weist der Antrieb-Schiebelagerkörper eine Lageraufnahme für einen Lagerbolzen auf, der den Antriebsarm des Spannhebels und den Antrieb-Schiebelagerkörper aneinander schwenkbar lagert. Am Spannhebel bzw. Antriebsarm sind vorzugsweise Lageraufnahmen für den vorgenannten Lagerkörper vorgesehen.

Auch in Bezug auf die Kopplung zwischen Spannhebel und Backen ist ein derartiges Lagerkonzept vorteilhaft. Beispielsweise weist das Abtrieb-Schiebelager einen an dem Backen in einer Abtrieb-Schiebeaufnahme verschieblich aufgenommenen Abtrieb-Schiebelagerkörper auf, wobei das Abtrieb-Schwenklager den Abtrieb-Schiebelagerkörper und den Abtriebsarm des Spannhebels schwenkbar koppelt. Der Spannhebel kann also relativ zu dem Schiebelagerkörper schwenken und diesen dann zwischen der Spannstellung und der Lösestellung hin und her bewegen, wodurch der Backen zwischen der Spannstellung und der Lösestellung angetrieben wird oder antreibbar ist.

Der Spannhebel weist vorzugsweise eine winkelige Gestalt auf. Der Abtriebsarm und der Antriebsarm sind vorzugsweise zueinander winklig, beispielsweise rechtwinklig oder in einem Winkel von ca. 80° bis 95°, besonders bevorzugt etwa 90°. Der Antriebsarm ist vorzugsweise länger als der Abtriebsarm. Somit kann eine Kraftverstärkung zwischen dem Spannantriebskörper und dem angetriebenen Backen erzielt werden.

Vorteilhaft sind der der Spannhebel und der Spannantriebskörper und/oder der Spannhebel und der Backen, insbesondere dessen Grundbacken, anhand einer Steckmontage aneinander montierbar. Beispielsweise sind Schiebeaufnahmen am Spannantriebskörper und/oder am Backen angeordnet, in die Schiebelagerkörper, die vorzugsweise am Spannhebel schwenkbar angeordnet sind, einsteckbar sind. Es ist auch möglich, dass der Spannhebel an einem oder beiden freien Endbereichen seiner Hebelarme eine Antriebskontur zum Einstecken in eine Aufnahme am Spannantriebskörper und/oder am Backen aufweist.

Bereits erwähnt wurde, dass der Futterkörper eine besonders große Gestalt oder ein großes Volumen aufweist, damit er große und schwere Werkstücke, beispielsweise Eisenbahnräder zuverlässig für eine spanende Bearbeitung halten kann. Dementsprechend massiv fallen auch die Komponenten der Spanneinrichtung, insbesondere die Backen aus. Wenn also bei einer spanenden Bearbeitung des Werkstücks oder Eisenbahnrads das Spannfutter mit geeigneter Drehzahl angetrieben wird, z.B. in einem Bereich von 200 bis 600, insbesondere etwa 400 Umdrehungen pro Minute, entwickeln die Backen hohe Fliehkräfte, gegen die der Spannantrieb bzw. der Spannantriebskörper an sich wirken muss. Beispielsweise wiegt ein jeweiliger Backen etwa 30 kg bis 60 kg, insbesondere etwa 50 kg, was hohe Fliehkräfte nach sich zieht.

Zur Lösung dieses Problems ist vorteilhaft vorgesehen, dass die Spanneinrichtung mindestens eine einem Backen zugeordnete Fliehkraft-Kompensationseinrichtung aufweist, insbesondere für jeden Backen eine Fliehkraft-Kompensationseinrichtung. Eine einem Backen zugeordnete Fliehkraft-Kompensationseinrichtung kompensiert eine durch den Backen bei einer Rotation des Spannfutters um seine Drehachse erzeugte und in die Lösestellung gerichtete Fliehkraft zumindest teilweise im Sinne einer Belastung des Backens in Richtung der Spannstellung. Mithin erzeugt also die Fliehkraft-Kompensationseinrichtung eine Kompensationskraft, die der Fliehkraft entgegen gerichtet ist. Zur Erzeugung der Kompensationskraft weist die Fliehkraft-Kompensationseinrichtung vorzugsweise einen Kompensationskörper auf, der in einer Führungsaufnahme des Futterkörpers radial bezüglich der Drehachse verschieblich gelagert ist. Der Kompensationskörper kann auch nicht exakt radial zur Drehachse gelagert sein. Zumindest ist dann aber vorgesehen, dass der Kompensationskörper mit einer bezüglich der Drehachse radialen Bewegungskomponente an der Führungsaufnahme verschieblich gelagert ist. Anhand eines Übertragungskörpers ist der Kompensationskörper mit dem Backen bewegungsgekoppelt, wobei der Übertragungskörper in einer Übertragungskörper-Lageraufnahme des Futterkörpers beweglich, z.B. schwenkbar, gelagert ist. Der Übertragungskörper ist ein Bestandteil eines Übertragungsgetriebes, welches die Kompensationskraft des Kompensationskörpers auf den Backen überträgt. Insbesondere ist das Übertragungsgetriebe ein Umlenkgetriebe. Wenn als beispielsweise der Kompensationskörper nach radial außen bezüglich der Drehachse des Spannfutters oder Futterkörpers bei eine Drehbetätigung des Spannfutters belastet ist, sorgt der Übertragungskörper oder das Übertragungsgetriebe für eine Kraftumlenkung dahingehend, dass die Fliehkraft des Kompensationskörpers entgegen der Fliehkraft des Backens wirkt, nämlich in Richtung der Spannstellung auf den Backen.

An der Backenführung, beispielsweise einer Nut der Backenführung, ist vorzugsweise eine Übertragungskörper-Montageöffnung angeordnet, durch die der Übertragungskörper in die Übertragungskörper-Lageraufnahme einführbar oder eingeführt ist. Vorteilhaft ist die Übertragungskörper-Montageöffnung an oder in einer Nut der Backenführung und/oder zwischen Führungskonturen der Backenführung angeordnet. Beispielsweise kann der Übertragungskörper von einem Boden der Backenführung oder Nut der Backenführung her in die Übertragungskörper-Lageraufnahme einführbar sein oder eingeführt sein.

Beispielsweise ist die Übertragungskörper-Montageöffnung neben der Montageöffnung für den Spannhebel angeordnet. Die Steckachsen der beiden Montageöffnungen, durch die der Übertragungskörper bzw. der Spannhebel in die jeweilige Montageöffnung einführbar sind, sind vorzugsweise winklig zueinander, insbesondere rechtwinklig zueinander.

Der Übertragungskörper ist vorzugsweise anhand eines Übertragungskörper-Schwenklagers schwenkbar gelagert. Ein erster von dem Übertragungskörper-Schwenklager abstehender Arm ist mit dem Backen schwenkbar und/oder verschieblich verbunden und ein zweiter, entgegengesetzt zu dem ersten Arm von dem Übertragungskörper-Schwenklager abstehender Arm ist mit dem Kompensationskörper schwenkbar und/oder verschieblich verbunden. Beispielsweise sind am Backen und am Kompensationskörper Lageraufnahmen angeordnet, in die die Lagerkörper oder Lagerköpfe an den freien Enden des Übertragungskörpers, insbesondere den Armen des Übertragungskörpers eingreifen. Durch eine schwenkbare und/oder verschiebliche Kopplung des Übertragungskörpers mit dem Kompensationskörper und dem Backen ist es möglich, dass der Übertragungskörper eine Antriebskraft des Kompensationskörpers auf den Backen und eine Antriebskraft des Backens auf den Kompensationskörper übertragen kann. Mithin sorgt also der Übertragungskörper für eine Kraftkopplung oder Bewegungskopplung zwischen dem Kompensationskörper und dem Backen. Der Übertragungskörper kann also beispielsweise als ein Schwenkhebelkörper oder Schwenkkörper ausgestaltet sein. Die beiden Arme des Übertragungskörpers können zueinander einen Winkel aufweisen.

Vorteilhaft ist es, wenn an der Werkstückseite eine Übertragungskörper-Montageöffnung für den Übertragungskörper angeordnet ist, durch die der Übertragungskörper in die Übertragungskörper-Lageraufnahme einführbar oder eingeführt ist. Es wäre grundsätzlich auch möglich, dass eine Übertragungskörper-Montageöffnung am Außenumfang des Futterkörpers vorgesehen ist, durch die der Übertragungskörper in die Übertragungskörper-Lageraufnahme einführbar ist.

Das Übertragungskörper-Schwenklager weist vorzugsweise ein Achskörper zu einem schwenkbaren Lagern des Übertragungskörpers auf, wobei der Achskörper anhand einer Montageöffnung an der Werkstückseite in den Futterkörper einbringbar oder eingebracht ist. Beispielsweise ist an der Werkstückseite eine Bohrung vorgesehen, die mit einem Montagekanal oder der Lageraufnahme für den Achskörper fluchtet, so dass der Achskörper durch die Montageöffnung oder den Montagekanal hindurch in die Lageraufnahme einbringbar ist.

An dem Achskörper kann der Übertragungskörper schwenkbar gelagert sein, d.h. dass der Achskörper beispielsweise ortsfest oder drehfest bezüglich des Futterkörper ist. Es ist aber auch möglich, dass der Achskörper in einer Schwenklageraufnahme des Futterkörpers oder am Futterkörper schwenkbar gelagert ist, wobei der Übertragungskörper dann drehfest oder drehbar an dem Achskörper gelagert sein kann.

Es ist vorteilhaft, wenn alle Komponenten der Fliehkraft-Kompensationseinrichtung über Montageöffnungen an dem Futterkörper montierbar sind, die nicht an der Antriebsseite angeordnet sind. Bevorzugt ist es, wenn zumindest die Mehrzahl, bevorzugt alle, Komponenten der Fliehkraft-Kompensationseinrichtung, nämlich beispielsweise Übertragungskörper, Kompensationskörper oder Achskörper zur schwenkbaren Lagerung des Übertragungskörpers, anhand von Montageöffnungen an dem Futterkörper montierbar oder montiert sind, die an der Werkstückseite oder am Außenumfang oder beiden angeordnet sind.

Vorteilhaft ist es, wenn mindestens eine Komponente oder alle Komponenten der Spanneinrichtung, beispielsweise der Hebelgetriebe und/oder der Fliehkraft-Kompensationseinrichtung, ausschließlich anhand oder durch Montageöffnungen, die an der Werkstückseite oder am Außenumfang des Futterkörpers und/oder nicht an der Antriebsseite angeordnet sind, an dem Futterkörper montierbar oder montiert sind.

Insbesondere vorteilhaft ist es, wenn der Futterkörper an der Antriebsseite in Bezug auf Komponenten der Spanneinrichtung, vorzugsweise einschließlich der Fliehkraft-Kompensationseinrichtung, vollständig geschlossen ist.

Der Übertragungskörper und/oder der Kompensationskörper und/oder ein Achskörper zur schwenkbaren Lagerung des Übertragungskörpers, sind vorzugsweise anhand von Montageöffnungen an dem Futterkörper montiert, die an der Werkstückseite und/oder am Außenumfang des Futterkörpers angeordnet sind.

Bevorzugt ist es, wenn der Spannantriebskörper mit einem Linearantrieb gekoppelt oder koppelbar ist, insbesondere einem hydraulischen und/oder elektrischen Linearantrieb.

Beispielsweise kann der Spannantriebskörper in der Art eines Kolbens in einer zylindrischen Antriebsaufnahme, insbesondere einer Bohrung, linear verschieblich aufgenommen sein.

Bevorzugt ist es, wenn der Spannantriebskörper zum Antreiben aller Backen mit den Backen bewegungsgekoppelt ist. Zwischen den Backen und dem Spannantriebskörper ist vorzugsweise jeweils ein Spannhebel angeordnet.

An der Antriebsseite, insbesondere konzentrisch mit der Drehachse oder Längsachse des Futterkörpers, ist vorzugsweise eine Antriebsöffnung zum Antreiben des Spannantriebskörpers angeordnet. Durch die Antriebsöffnung hindurch kann beispielsweise der Spannantrieb, der einen Bestandteil der Bearbeitungsmaschine oder des Spannfutters bilden kann, mit dem Spannantriebskörper gekoppelt sein. Beispielsweise greift eine Antriebsstange durch die Antriebsöffnung hindurch.

Die Antriebsöffnung ist vorzugsweise durch einen geschlossenen kreisringförmigen oder ringförmigen Ringkörper oder kreisringförmigen oder ringförmigen Ringabschnitt der Antriebsseite des Futterkörpers begrenzt. Der Ringabschnitt kann einstückig mit dem Futterkörper sein oder einen Bestandteil des Futterkörpers bilden. Es ist aber auch möglich, dass in den Futterkörper ein Ringkörper eingesetzt ist, der aber ebenfalls geschlossen ist. Schlitze oder dergleichen andere Durchtrittsöffnungen, die mit den Hebelaufnahmen des Futterkörpers kommunizieren, sind an oder im Bereich der Antriebsöffnung nicht vorhanden, sondern der Ringabschnitt oder der Ringkörper oder beide. Der Ringabschnitt oder Ringkörper ist also im Zentrum bezüglich der Drehachse oder Längsachse des Futterkörpers angeordnet und sorgt für entsprechende Stabilität des Futterkörpers.

Ein Zentralbereich des Futterkörpers, der von der Drehachse oder seiner Längsachse durchsetzt ist, ist vorzugsweise im Wesentlichen geschlossen. Das Grundmaterial des Futterkörpers erstreckt sich vorzugsweise bis in den Zentralbereich.

In dem Zentralbereich kann eine Montageöffnung für eine an dem Spannantriebskörper zu befestigende Komponente, z.B. eine Schraube oder dergleichen, vorgesehen sein. Ein Durchmesser dieser Öffnung ist jedoch vorzugsweise kleiner als ein von der Drehachse durchsetzter Durchmesser des Spannantriebskörpers. Ein Querschnitt der Öffnung im Zentralbereich, der von der Drehachse oder Längsachse durchsetzt ist, ist vorzugsweise kleiner als ein Querschnitt des Spannantriebskörpers, der ebenfalls von der Drehachse oder Längsachse durchsetzt ist.

Weiterhin ist es vorteilhaft, wenn der Futterkörper an der Werkstückseite in seinem von der Drehachse durchsetzten Zentralbereich einen ringförmigen Abschnitt aufweist, der ringförmig geschlossen nach radial außen über eine Antriebsaufnahme für den Spannantriebskörper vorsteht. Eine Frontseite oder zur Werkstückseite orientierte freie Seite des Ringabschnitts ist vorzugsweise als eine Planfläche und/oder geschlossene Oberfläche und/oder eine Oberfläche ohne eine Vertiefung ausgestaltet. Vorteilhaft weist dieser ringförmige Abschnitt oder Ringabschnitt keinen Schlitz und/oder keine Vertiefung und/oder keine Ausnehmung für eine Komponente der Backenführung oder der Spanneinrichtung auf, beispielsweise keine Aufnahme für eine Führungsschiene einer Backenführung. Die Backenführung erstreckt sich nur bis zu dem ringförmigen Abschnitt nach radial innen bezüglich der Drehachse oder Längsachse des Futterkörpers.

Weiterhin vorteilhaft ist es, wenn der Futterkörper an der Werkstückseite in seinem von der Drehachse durchsetzten Zentralbereich einstückig einen Boden einer Antriebsaufnahme für den Spannantriebskörper bildet, der die Antriebsaufnahme zur Werkstückseite ganz oder zumindest teilweise verschließt. Beispielsweise weist der Boden die vorgenannte Montageöffnung für eine an dem Spannantriebskörper zu montierende Komponente, insbesondere einen Bolzen, auf.

Besonders bevorzugt ist vorgesehen, dass der Futterkörper an der Antriebsseite und an der Werkstückseite radial innen bezüglich der Drehachse zu der Antriebsaufnahme hin einen einstückigen, geschlossenen Ringabschnitt aufweist und/oder ringförmig einstückig geschlossen ist und dass der Futterkörper an der Antriebsseite radial außen bezüglich der Antriebsaufnahme einen vollständig geschlossenen Ringabschnitt ausbildet oder aufweist. Insbesondere sind also vorzugsweise an der Antriebsseite und an der Werkstückseite keinerlei Schlitze an jeweiligen antriebsseitigen und werkstückseitigen, mit dem Material oder Grundkörper des Futterkörpers einstückigen Ringabschnitten des Futterkörpers angeordnet.

Die Antriebsarme der Spannhebel sind vorteilhaft zwischen dem Ringabschnitt oder Ringkörper und der Werkstückseite, insbesondere einer Frontwand der Werkstückseite, angeordnet und mit dem Spannantriebskörper gekoppelt. Der Ringabschnitt oder Ringkörper begrenzt also einen Aufnahmeraum oder Bewegungsraum zwischen der Antriebsseite und der Werkstückseite, in welchem der jeweilige Antriebsarm eines Spannhebels angeordnet ist. Dieser Aufnahmeraum oder Bewegungsraum ist beispielsweise in der Art eines Schlitzes ausgestaltet, der sich jedoch nicht bis zur Antriebsseite hin erstreckt, sondern an der Antriebsseite durch den Ringabschnitt oder den Ringkörper begrenzt ist.

Es ist möglich, dass beides vorhanden ist, nämlich ein kreisringförmiger oder ringförmiger Ringabschnitt, der einstückig mit dem Futterkörper ist, sowie ein Ringkörper, der die Antriebsöffnung zumindest partiell verschließt. Beispielsweise ist der Spannantriebskörper durch eine von dem Ringabschnitt umgebene Montageöffnung in die Antriebsöffnung hinein montierbar, wobei anschließend der Ringkörper zum Halten des Spannantriebskörpers in der Antriebsöffnung dient.

Nachfolgend wird ein Ausführungsbeispiel der Erfindung anhand der Zeichnung erläutert. Es zeigen:
- Figur 1: eine perspektivische Schrägansicht eines Spannfutters von der Werkstückseite her,
- Figur 2: das Spannfutter gemäß Figur 1, jedoch mit einem Werkstück in Gestalt eines Eisenbahnrads,
- Figur 3: das Spannfutter gemäß Figur 2, jedoch mit dem Werkstück in einer um 180° gedrehten Aufspannung,

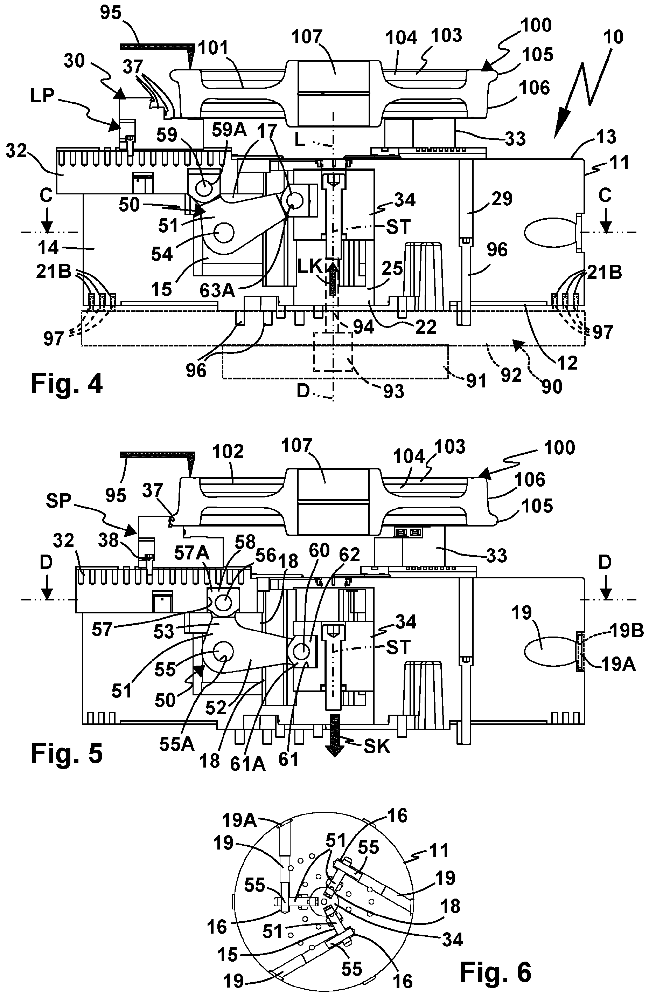

- Figur 4: einen Schnitt A-A durch das Spannfutter mit dem Werkstück gemäß Figur 2, wobei eine Spanneinrichtung des Spannfutters in Lösestellung ist,
- Figur 5: einen Schnitt B-B durch das Spannfutter mit dem Werkstück gemäß Figur 3, wobei die Spanneinrichtung in einer Spannstellung ist,
- Figur 6: ein Schnitt C-C durch das Spannfutter gemäß Figur 4,
- Figur 7: eine perspektivische Schrägansicht auf das Spannfutter gemäß vorstehender Figuren mit demontierten Backen der Spanneinrichtung,
- Figur 8: eine Backenführung für einen Backen in perspektivischer Schrägansicht mit demontierten Backen, etwa entsprechend einem Detail D1 in Figur 7,
- Figur 9: ein Detail D2 aus Figur 7, jedoch in einer Schnittebene entsprechend einer Schnittlinie D-D in Figur 5 mit einem Backen und einer Fliehkraft-Kompensationseinrichtung,

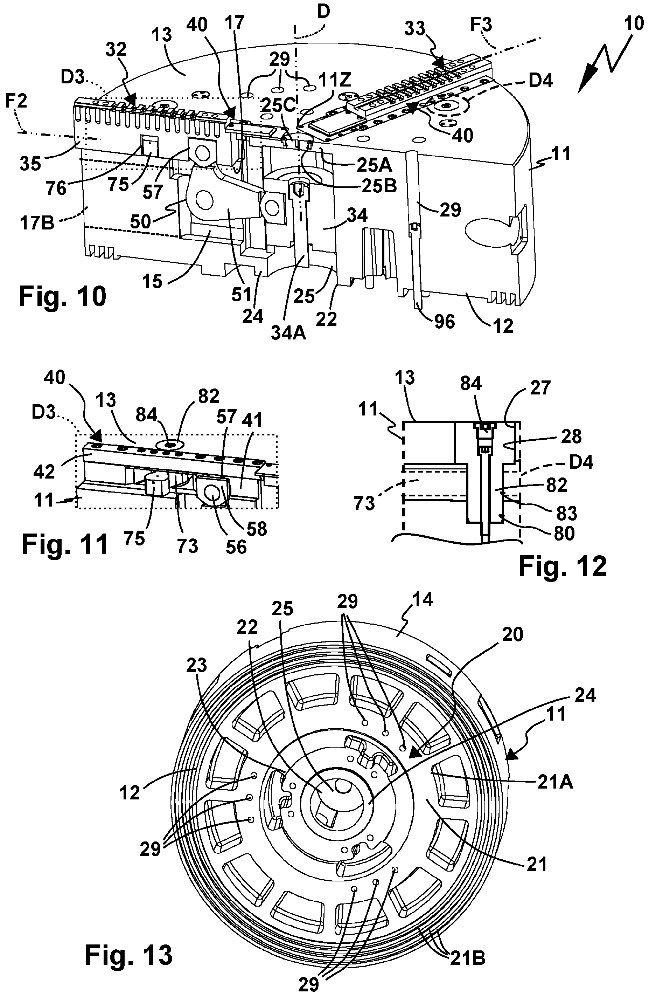

- Figur 10: eine perspektivische Ansicht des Spannfutters gemäß vorstehender Figuren, etwa entlang einer Schnittlinie E-E in Figur 1,
- Figur 11: ein Detail D3 aus Figur 10, jedoch ohne einen Backen,
- Figur 12: einen Schnitt durch das Spannfutter gemäß Figur 10 im Bereich eines Details D4, und
- Figur 13: eine Antriebsseite des Spannfutters gemäß vorstehender Figuren.

Ein Spannfutter 10 dient zum Spannen von Werkstücken 100, beispielsweise Eisenbahnrädern 103. Das Spannfutter 10 kann an einer Bearbeitungsmaschine 90 betrieben werden oder bildet einen Bestandteil der Bearbeitungsmaschine 90.

Die Bearbeitungsmaschine 90 umfasst einen Drehantrieb 93, der eine Drehantriebshalterung 92 für das Spannfutter 10 antreibt. Das Spannfutter 10 kann an der Drehantriebshalterung 92 befestigt werden, beispielsweise mit der Drehantriebshalterung verklemmt, mit Montagebolzen 96 verschraubt oder dergleichen anderweitig befestigt werden.

An der Drehantriebshalterung 92 ist weiterhin ein Spannantrieb 93 angeordnet, beispielsweise ein hydraulischer Antrieb, dessen Abtrieb 94 mit dem Spannfutter 10 koppelbar oder gekoppelt ist.

Das Spannfutter 10 weist einen Futterkörper 11 auf, der mit einer Antriebsseite 12 mit dem Drehantrieb 91 verbunden oder verbindbar ist, sowie eine zu der Antriebsseite 12 entgegengesetzten Werkstückseite 13 auf, die zum Halten oder zur Anordnung des Werkstücks 100 vorgesehen ist. Die Antriebsseite 12 und die Werkstückseite 13 bilden einander entgegengesetzte Stirnseiten des Futterkörpers 11.

Das Werkstück 100 kann in unterschiedlichen Orientierungen am Spannfutter 10 befestigt werden, nämlich beispielsweise mit einer ersten Stirnseite 101 zur Werkstückseite 13 gerichteten Orientierung, oder mit einer zweiten Stirnseite 102 zur Werkstückseite 13 gerichteten Orientierung. Die erste und die zweite Stirnseite 101, 102 sind beispielsweise einander entgegengesetzte Seiten einer Radscheibe 104 des Eisenbahnrads 103.

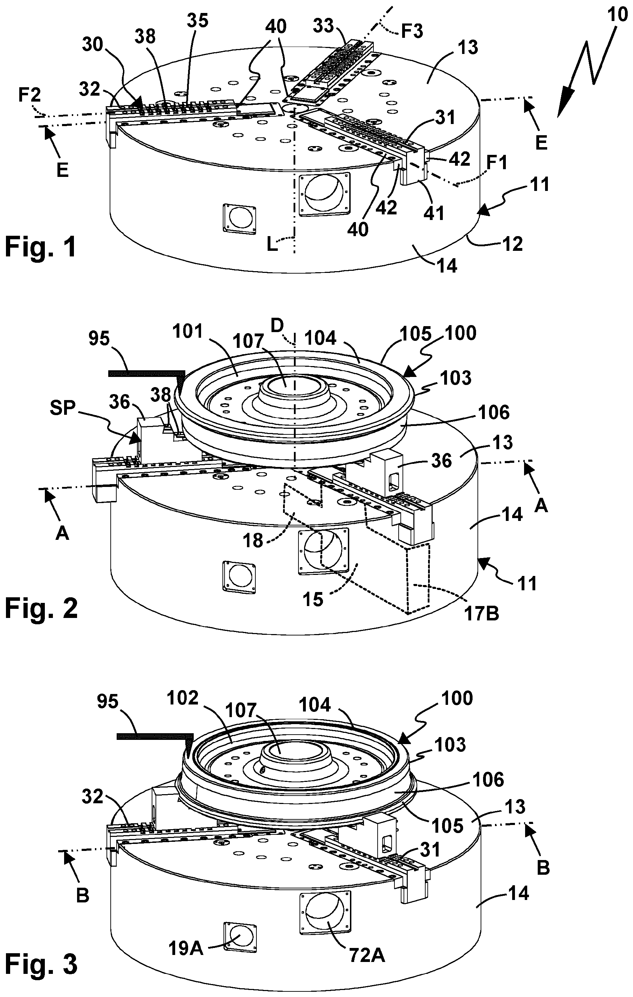

In jeder der Aufspannungen des Werkstücks 100 oder 103 an dem Spannfutter 10 sind Flächen des Werkstücks 100 oder des Eisenbahnrads 103 bearbeitbar, beispielsweise ein Radkranz 105 des Werkstücks 100 und/oder eine Lauffläche 106, sowie eine Nabenbohrung 107. Beispielsweise kann ein Drehwerkzeug oder Drehmeißel 95 bei Aufspannung des Eisenbahnrads 103 mit der zweiten Stirnseite 102 in Richtung der Werkstückseite 13 (Figur 2) zunächst den Radkranz 105, dann die erste Stirnseite 101 der Radscheibe 104 und schließlich die Nabenbohrung 107 bearbeiten. Bei der entgegengesetzten Aufspannung des Werkstücks 100 (Figur 3) wird dann zunächst die Lauffläche 106, anschließend die zweite Stirnseite 102 und schließlich vorteilhaft nochmals die Nabenbohrung 107 anhand des Drehmeißels 95 spanend bearbeitet.

Das Werkstück 100 hat ein hohes Gewicht, weshalb die nachfolgend erläuterte mechanische Ausgestaltung des Spannfutters 10 und insbesondere massive Ausgestaltung des Futterkörpers 11 mit keinen oder nur wenigen Schwächungen an der Antriebsseite 12 durch Montageöffnungen besonders vorteilhaft ist.

Das Spannfutter 10 kann an der Drehantriebshalterung 92 von der Werkstückseite 13 her montiert werden. Die Montagebolzen 96 sind in Schraubaufnahmen 29 angeordnet, die den Futterkörper 11 von der Werkstückseite 13 zur Antriebsseite 12 durchsetzen, und in die Drehantriebshalterung 92 eingeschraubt.

An der Antriebsseite 12 weist der Futterkörper 11 eine Antriebsfläche 20 auf, an der Verbindungskonturen 21, insbesondere Drehmitnahmekonturen, zur Verbindung mit der Drehantriebshalterung 92 angeordnet sind.

Die Verbindungskonturen 21 umfassen beispielsweise einen Zentrierring oder einen Zentrierrand 21A, der sich um die Drehachse D erstreckt. Mit dem Zentrierring oder Zentrierrand ist das Spannfutter 10 an der Drehantriebshalterung 92 zentrierbar.

Radial außen um den Zentrierring oder Zentrierrand 21A erstrecken sich optional ringförmig Dichtkonturen 21B, die vorzugsweise konzentrisch zueinander sind. In diese Dichtkonturen 21B können Gegen-Dichtkonturen 97, beispielsweise Ringe, der Drehantriebshalterung 92 eingreifen und somit das Spannfutter 10 an der Drehantriebshalterung 92 radial außen bezüglich der Drehachse D dichtend halten.

An dem Zentrierring 21A sind weiterhin die Schraubaufnahmen 29 für die Montagebolzen 96 vorgesehen, die sich bis zur Werkstückseite 13 erstrecken. Durch diese Schraubaufnahmen 29 hindurch können für die Montagebolzen 96 gesteckt werden, die mit der Drehantriebshalterung 92 der Bearbeitungsmaschine 90 verschraubbar sind.

Weiterhin ist an der Antriebsfläche 20 oder Antriebsseite 12 eine Antriebsöffnung 22 angeordnet, durch die der Abtrieb 94 des Spannantriebs 93 in eine Antriebsaufnahme 25 eingreifen kann, in der ein Spannantriebskörper 34, der beispielsweise in der Art eines Kolbens ausgestaltet ist, linear beweglich entlang einer Stellachse ST verschieblich aufgenommen ist. Die Antriebsaufnahme 25 weist eine beispielsweise zylindrische Gestalt auf.

Um die Antriebsaufnahme 25 und/oder die Antriebsöffnung 22 erstreckt sich ein Ringabschnitt 23, der geschlossen ist. Der Ringabschnitt 23 kann die Antriebsaufnahme 25 direkt umgeben. Es ist aber auch möglich, dass die Antriebsaufnahme 25 außenseitig durch einen Ringkörper 25 begrenzt ist, der an dem Ringabschnitt 25, beispielsweise an einer Aufnahme am Ringabschnitt 23, aufgenommen ist. Der Ringkörper 25 ist beispielsweise zur Montage des Spannantriebskörpers 34 in der Antriebsaufnahme 25 lösbar am Futterkörper 11 befestigt, zum Beispiel mit diesem verschraubt.

Auch an der Werkstückseite 13 ist die Antriebsaufnahme 25 durch den Futterkörper 11 sozusagen verschlossen oder zumindest im Wesentlichen verschlossen.

Beispielsweise erstreckt sich der Futterkörper 11 mit einem Boden oder Bodenabschnitt 25A bis zu einem von der Drehachse D durchsetzten Zentralbereich 11Z. Der Boden 25A verschließt die Antriebsaufnahme 25 zur Werkstückseite 13 hin, ganz oder zumindest im Wesentlichen.

An dem Boden 25A ist optional eine Montageöffnung 25B vorgesehen, durch die eine am Spannantriebskörper 34 zu befestigende Komponente, beispielsweise eine Schraube 34A, hindurch steckbar und dreh-betätigbar ist. Ein Deckel 25C kann die Montageöffnung 25B verschließen.

Der Boden 25A ist mit dem Material des Futterkörpers 11 in der Umgebung der Antriebsaufnahme 25 einstückig. Durch diese Maßnahme kann eine optimale Steifigkeit des Futterkörpers 11 im Zentralbereich 11Z erzielbar sein.

Der Spannantriebskörper 34 bildet einen Bestandteil einer Spanneinrichtung 30, mit der das Werkstück 100 an dem Spannfutter 10 verspannbar ist.

Die Spanneinrichtung 30 umfasst eine Backenanordnung mit drei gleichartig aufgebauten Backen 31, 32 und 33, die in einem Winkelabstand jeweils zueinander um eine Längsachse L des Futterkörpers 11 oder Spannfutters 10 angeordnet sind. Beispielsweise sind die Backen 31 - 33 in gleichen Winkelabständen zueinander an dem Futterkörper 11 bezüglich der Längsachse L angeordnet.

Die Längsachse L erstreckt sich zwischen der Antriebsseite 12 und der Werkstückseite 13. Die Längsachse L entspricht einer Drehachse D, um die das Spannfutter 10 antreibbar oder angetrieben ist, beispielsweise anhand des Drehantriebs 91.

Die Spanneinrichtung 30 umfasst für jeden Backen 31, 32 und 33 eine Hebelgetriebe 50, mit dem der Backen 31 - 33 mit dem Spannantriebskörper 34 bewegungsgekoppelt ist, so dass eine Bewegung des Spannantriebskörpers 34 entlang der Stellachse ST eine Verstellung des Backens 31, 32 und 33 zwischen einer Spannstellung SP, in der der Backen 31 oder die Spanneinrichtung 30 das Werkstück 100 mit dem Spannfutter 10 verspannt, und einer Lösestellung LP bewirkt, in der die Backen 31 - 33 oder die Backeneinrichtung 30 das Werkstück 100 freigeben, so dass dieses entweder an das Spannfutter 10 herangeführt oder vom Spannfutter 10 entfernt werden kann. Eine Kraftbeaufschlagung des Spannantriebskörpers 34 mit einer Spannkraft SK verstellt die Spanneinrichtung 30 in die Spannstellung SP und eine Kraftbeaufschlagung des Spannantriebskörpers 34 mit einer zu der Spannkraft SK entgegen gerichteten Lösekraft LK verstellt die Spanneinrichtung 30 in die Lösestellung LP.

Nachfolgend wird anhand eines Backens 31 die Kopplung mit dem Spannantriebskörper 34 erläutert, wobei diese Erläuterung exemplarisch für jeden der Backen 31, 32 und 33 ist.

Beispielsweise weisen die Backen 31 - 33 Grundbacken 35 auf, an denen eine Werkstückhalterung 36 anhand einer Befestigungseinrichtung 38 lösbar befestigbar ist oder fest angeordnet ist. Die Werkstückhalterung 36 weist Stützkonturen 37 zum Stützen des Werkstücks 100 auf.

Die Backen 31, 32 und 33 sind an Backenführungen 40 jeweils individuell beweglich zwischen der Spannstellung SP und der Lösestellung LP entlang von Stellachsen F1, F2 und F3 gelagert. Die Backenführungen 40 verlaufen radial bezüglich der Längsachse L oder Drehachse D. Beispielsweise verlaufen die Stellachsen F1, F2 und F3 radial zur Drehachse D oder Längsachse L.

Jede Backenführung 40 umfasst eine Nut 41, an der Führungsschienen oder Führungskonturen 42 für einen jeweiligen Backen 31, 32 oder 33 angeordnet ist.

Jedes Hebelgetriebe 50 umfasst einen Spannhebel 51, der einen Antriebsarm 52 sowie einen Abtriebsarm 53 aufweist. Der Antriebsarm 52 ist mit dem Spannantriebskörper 34 bewegungsgekoppelt, der Abtriebsarm 53 mit dem Backen 31, 32 oder 33, insbesondere dessen Grundbacken 35 bewegungsgekoppelt.

Der Spannhebel 51 ist anhand eines Hebel-Schwenklagers 54 schwenkbar bezüglich des Futterkörpers 11 gelagert. Das Hebel-Schwenklager 54 umfasst beispielweise einen Lagerachskörper 55, der in einer Lageraufnahme 16 des Futterkörpers 11 drehfest oder drehbar gelagert ist.

Der Lagerachskörper 55 durchsetzt beispielsweise den Spannhebel 51 in einem Winkelbereich zwischen dem Antriebsarm 52 und dem Abtriebsarm 53. Der Antriebsarm 52 und der Abtriebsarm 53 sind winklig zueinander, beispielsweise etwa rechtwinklig zueinander. Der Antriebsarm 52 steht vom Hebel-Schwenklager 54 in Richtung des Backens 31, 32 oder 33 vor. Der Abtriebsarm 53 steht vom Hebel-Schwenklager 54 in Richtung des Spannantriebskörpers 34 vor.

Der Abtriebsarm 53 ist anhand eines Abtrieb-Schwenklagers 56 mit einem jeweiligen Backen 31, 32 oder 33, insbesondere dessen Grundbacken 35, bewegungsgekoppelt. Beispielsweise weist das Abtrieb-Schwenklager 56 einen Abtrieb-Schiebelagerkörper 58 auf, der in einer Abtrieb-Schiebeaufnahme 57 des Backens 31, 32 oder 33, insbesondere des Grundbackens 35, verschieblich gelagert ist. Beispielsweise ist eine Verschiebeachse oder Stellachse eines Abtrieb-Schiebelagers 57A, welches durch die Schiebeaufnahme 57 und den Schiebelagerkörper 58 gebildet ist, etwa in Längserstreckungsrichtung des Abtriebsarms 53 orientiert.

Eine ähnliche Schwenk-Schiebelagerung ist auch in Bezug auf die Kopplung des Antriebsarms 52 mit dem Spannantriebskörper 34 vorhanden. Beispielsweise ist zwischen dem Antriebsarm 52 und dem Spannantriebskörper 34 ein Antrieb-Schwenklager 60 vorgesehen, welches zwischen dem freien Endbereich des Antriebsarms 52 und dem Spannantriebskörper 34 angeordnet ist und den Spannantriebskörper 34 mit dem Antriebsarm 52 schwenkbar koppelt.

Das Antrieb-Schwenklager 60 ist an einen Antrieb-Schiebelagerkörper 62 vorgesehen, der in einer Antrieb-Schiebeaufnahme 61 des Spannantriebskörpers 34 verschieblich gelagert ist. Eine Verschiebeachse eines Antrieb-Schiebelagers 61A, welches durch den Antrieb-Schiebelagerkörper 62 und die Schiebeaufnahme 61 gebildet ist, erstreckt sich etwa in Längserstreckungsrichtung des Antriebsarms 52.

Die Schiebelagerkörper 58, 62 sind z.B. in der Art von Nutensteinen oder Kolben ausgestaltet, die in den beispielsweise an Ihren Bodenbereichen geschlossenen Schiebeaufnahmen 57, 61 verschieblich aufgenommen sind.

Zwischen einem jeweiligen Schiebelagerkörper 58 und 62 ist ein Achskörper oder Lagerachskörper 59, 63 vorgesehen. Beispielsweise ist der Achskörper 59 in einer Achskörper-Aufnahme 59R des Schiebelagerkörpers 58 aufgenommen. Der Achskörper 63 ist in einer Achskörper-Aufnahme 63A des Schiebelagerkörpers 62 aufgenommen.

Die Spannhebel 51 sind in Hebelaufnahmen 15 des Futterkörpers 11 aufgenommen. Die Hebelaufnahmen 15 weisen Hebel-Montageöffnungen 17 auf, die zur Werkstückseite 13 hin offen sind. Beispielsweise sind die Hebel-Montageöffnungen 17 im Bereich der Backenführungen 40 angeordnet, insbesondere in einem Bodenbereich der Nut 41. Durch die Hebel-Montageöffnungen 17 hindurch kann ein jeweiliger Spannhebel 51 in die Hebelaufnahme 15 eingebracht werden.

Alternativ möglich ist aber auch, dass ein jeweiliger Spannhebel 51 durch eine beispielsweise in Figur 2 schematisch angedeutete Hebel-Montageöffnung 17B, die am Außenumfang 14 angeordnet ist und mit der ebenfalls schematisch angedeuteten Hebelaufnahme 15 verbunden ist, in die Hebelaufnahme 15 einführbar ist. Die Hebel-Montageöffnung 17B ist beispielsweise als ein Aufnahmeschlitz oder Einführschlitz ausgestaltet und kommuniziert mit der Hebelaufnahme 15.

Mit jeder Hebelaufnahme 15 korrespondiert ein Montagekanal 19, der mit der Lageraufnahme 16 fluchtet und an dem Außenumfang 14 des Futterkörpers 11 eine Einführöffnung 19A aufweist. Durch die Einführöffnung 19A und den Montagekanal 19 hindurch kann der Lagerachskörper 55 in die Lageraufnahme 16 eingebracht werden, wobei er dann auch den Spannhebel 51 an einer Lageraufnahme 55A des Spannhebels 51 durchsetzt. Die Einführöffnung 19A kann durch einen Deckel 19B verschlossen sein, sodass der Montagekanal 19 verschlossen ist.

Beispielsweise ist der Spannhebel 51 anhand der Lageraufnahme 55A am Lagerachskörper 55 schwenkbar gelagert. Es ist aber auch möglich, dass der Lagerachskörper 55 schwenkbar in der Lageraufnahme 16 gelagert ist, so dass der Spannhebel 51 anhand des schwenkbar gelagerten Lagerachskörpers 55 schwenkbar ist.

Die Hebelaufnahme 15 kommuniziert mit einer Öffnung 18 zur Antriebsaufnahme 25. Die Spannhebel 51 sind durch die Öffnungen 18 hindurch mit dem Spannantriebskörper 34 gekoppelt.

Eine Montage des Spannhebels 51 am Futterkörper 11 sieht vor, dass dieser durch die Hebel-Montageöffnung 17 hindurch in die Hebelaufnahme 15 eingebracht wird, bis der Antriebsarm 53 durch die Öffnung 18 zum Spannantriebskörper 34 vorsteht. Auf diesem Wege kann der Antrieb-Schiebelagerkörper 62 in die Antrieb-Schiebeaufnahme 61 eingebracht werden.

Der Abtriebsarm 53 steht zur Hebel-Montageöffnung 17 vor, durch die der Abtriebsarm 53 mit einem jeweiligen Backen 31, 32 oder 33 in Eingriff gebracht werden kann. Beispielsweise wird der jeweilige Backen 31, 32, 33 sozusagen auf den Abtriebsarm 53 aufgesteckt, nämlich auf den Abrieb-Schiebelagerkörper 58, der anhand einer Steckverbindung in die Abtrieb-Schiebeaufnahme 57 am jeweiligen Backen 31, 32 und 33 eingreift.

Sodann wird der Grundbacken 35 eines jeweiligen Backens 31, 32 und 33 in der Backenführung 40 fixiert, indem die Führungsschienen 42 neben der Nut 41 in Schienenaufnahmen 43 verschraubt werden. Die Führungsschienen 42 sind dann in einem Hintergriff mit dem einer Hintergreifkontur des Grundbackens 35, so dass dieser unverlierbar, jedoch verschieblich an der Backenführung 40 gelagert ist.

Die Backen 31, 32 und 33 entwickeln bei einem Betrieb der Bearbeitungsmaschine 90, wenn sie durch den Drehantrieb 99 und die Drehachse D angetrieben werden, Fliehkräfte FK, die radial bezüglich der Drehachse D bzw. Längsachse L verlaufen. Mithin werden also die Backen 31 aufgrund ihrer Gewichtskraft nach radial außen bezüglich der Drehachse D kraftbeaufschlagt, wogegen an sich der Spannantriebskörper 34 und der Spannantrieb 93 entsprechende Kräfte entwickeln müssten. Problematisch ist dabei insbesondere, dass bereits bei der Aufspannung des Werkstücks 100 am Spannfutter 10 entsprechende Verspannung mit einer die Fliehkräfte FK kompensierenden Kompensationskraft erfolgen müsste, was das Werkstück 100 entsprechend belasten würde. Beispielsweise könnte sich die Radscheibe 104 zur Werkstückseite 13 hin oder von der Werkstückseite 13 weg wölben. Im Sinne einer Maßhaltigkeit oder Maßgenauigkeit kann es nicht vorteilhaft sein, wenn das Werkstück 100 bereits im Sinne einer Fliehkraftkompensation noch vor der eigentlichen spanenden Bearbeitung belastet ist.

Jedem Backen 31 - 33 ist eine nachfolgend erläuterte Fliehkraft-Kompensationseinrichtung 70 zugeordnet. Nachfolgend wird eine der Fliehkraft-Kompensationseinrichtungen 70 exemplarisch beschrieben.

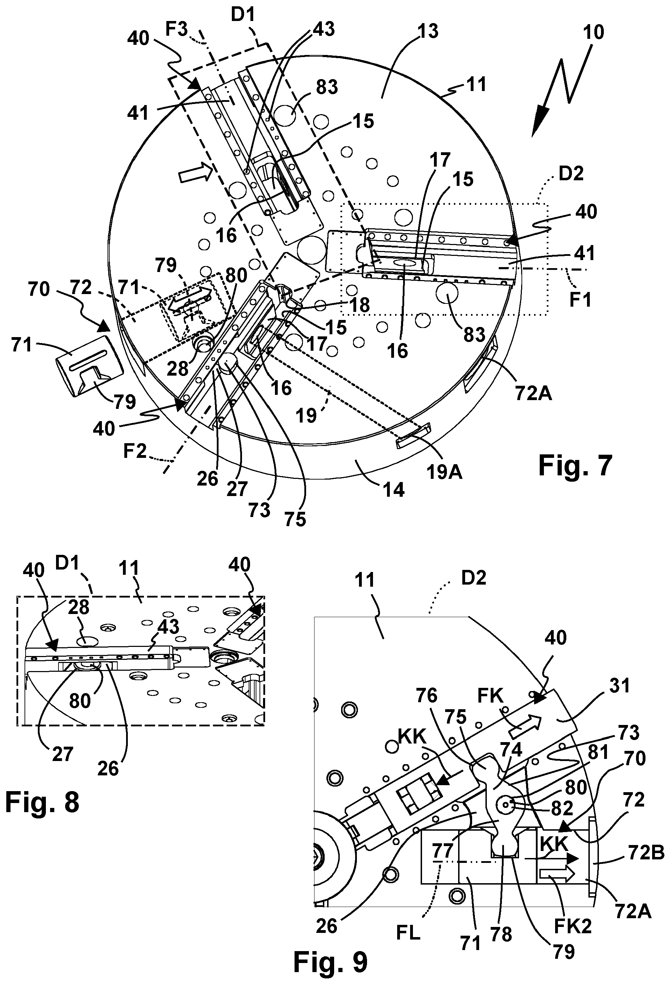

Die Fliehkraft-Kompensationseinrichtung 70 weist einen Kompensationskörper 71 auf, der in einer Führungsaufnahme 72 des Futterkörpers 11 entlang einer Schiebeachse FL verschieblich gelagert ist. Die Führungsaufnahme 72 ist beispielsweise als ein Führungskanal ausgestaltet, in der der Kompensationskörper 71 verschieblich aufgenommen ist. Mithin bildet also die Führungsaufnahme 72 einen Bestandteil einer Führung für den Kompensationskörper 71. Zur besseren Verständlichkeit ist in Figur 7 ist der Kompensationskörper 71 einmal außerhalb und einmal innerhalb einer schematisch angedeuteten Führungsaufnahme 72 dargestellt.

Am Außenumfang 14 sind Einführöffnungen 72A angeordnet, die durch die die Kompensationskörper 71 in die Führungsaufnahmen 72 einführbar sind. Die Einführöffnungen 72A sind vorzugsweise verschließbar oder durch einen Deckel 72B verschlossen.

Ein Gewicht des Kompensationskörpers 71 entspricht vorzugsweise dem Gewicht eines Backens 31, 32 und 33. Insbesondere ist es vorteilhaft, wenn der Kompensationskörper 71 etwa so schwer ist wie eine Kombination aus Grundbacken 35 und Werkstückhalterung 36. Andere Gewichtsverhältnisse sind ohne weiteres möglich.

Zwischen dem Kompensationskörper 71 und dem Backen 31, 32 oder 33 ist ein Übertragungskörper 73 eines Übertragungsgetriebes angeordnet. Das Übertragungsgetriebe oder der Übertragungskörper 73 überträgt eine Kompensationskraft KK des Kompensationskörpers 71 auf den Backen 31, 32 oder 33, wobei die Kompensationskraft KK entgegen der Fliehkraft FK wirkt.

Beispielsweise wird der Kompensationskörper 71 bei einer Drehung des Spannfutters 10 um die Drehachse D durch eine Fliehkraft FK2 belastet, die nach radial außen bezüglich der Drehachse D wirkt. Im Prinzip werden also beide, der Backen 31, 32 oder 33, und der Kompensationskörper 71 durch Fliehkräfte FK, FK2 belastet, wenn das Spannfutter 10 um die Drehachse D dreht. Allerdings sorgt das Übertragungsgetriebe oder der Übertragungskörper 73 dafür, dass die Fliehkraft FK2 des Übertragungskörpers 71 als eine Kompensationskraft KK entgegengesetzt im Sinne einer Kompensation der Fliehkraft FK des Backens 31, 32 oder 33 auf den jeweiligen Backen 31-33 wirkt.

Der Übertragungskörper 73 ist beispielsweise als ein Hebelkörper ausgestaltet. Der Übertragungskörper 73 umfasst einen Arm 74 und einen Arm 77, die von einem Übertragungskörper-Schwenklager 81 abstehen, beispielsweise zueinander entgegengesetzten Seiten vom Übertragungskörper-Schwenklager 81.

Der Arm 74 weist einen Lagervorsprung 75 auf, der in eine Lageraufnahme 76 des Backens 31, 32 oder 33, insbesondere des Grundbackens 35 eingreift. Der Arm 77 weist ebenfalls an seinem freien Ende einen Lagervorsprung auf, nämlich einen Lagervorsprung 78, der in eine Lageraufnahme 79 am Kompensationskörper 71 eingreift. Der Übertragungskörper 73 sorgt also für eine Umlenkung der Fliehkraft des Kompensationskörpers 71 in eine die Fliehkraft FK des Backens 31, 32 oder 33 kompensierende Kompensationskraft KK.

Der Übertragungskörper 73 ist in einer Übertragungskörper-Lageraufnahme 26 des Futterkörpers 11 schwenkbar gelagert. In der Übertragungskörper-Lageraufnahme 26 befindet sich auch das Übertragungskörper-Schwenklager 81. Der Übertragungskörper 73 ist ebenfalls an einer von der Antriebsseite 12 abgewandten Seite des Futterkörpers 11 an demselben montierbar, nämlich über eine Übertragungskörper-Montageöffnung 27. Die Übertragungskörper-Montageöffnung 27 ist vorzugsweise an der Werkstückseite 13 angeordnet.

Beispielsweise ist die Übertragungskörper-Montageöffnung 27 an einejeweiligen Backenführung 40, insbesondere der Nut oder oberhalb der Nut 41, insbesondere oberhalb eines Bodens der Nut 41 angeordnet. Mithin steht also beispielsweise der Arm 74 des Übertragungskörpers 73 in die Nut 41 vor, in der wiederum der Grundbacken 35 des jeweiligen Backens 31, 32 oder 33 angeordnet ist.

Der andere Arm 77 des Übertragungskörpers 73 steht in die Führungsaufnahme 72 vor, wo er in die Lageraufnahme 79 des Kompensationskörpers 71 eingreift. Anhand der Kombination von Lagervorsprung 75 und Lageraufnahme 76 sowie Lagervorsprung 78 und Lageraufnahme 79 ist der Übertragungskörper 73 sowohl mit dem Backen 31 - 33 als auch mit dem Kompensationskörper 71 schwenkbar und vorzugsweise auch verschieblich gelagert.

Auch das Übertragungskörper-Schwenklager 81 ist an einer von der Antriebsseite 12 abgewandten Seite des Futterkörpers 11 montierbar. Beispielsweise ist ein Achskörper 82 in einer Lageraufnahme 80 des Futterkörpers 11 gehalten. Die Lageraufnahme 80 fluchtet mit einem Montagekanal 28, der zur Werkstückseite 13 des Futterkörpers 11 offen ist bzw. eine Einführöffnung für den Achskörper 82 aufweist.

Der Achskörper 82 ist beispielsweise stufenförmig und/oder kann von einer den Achskörper 82 durchsetzenden Montageschraube 84 am Futterkörper 11 fixiert sein.

Somit kann also der Übertragungskörper 73 zunächst durch die Übertragungskörper-Montageöffnung 27 in der Übertragungskörper-Lageraufnahme 26 am Futterkörper 11 montiert werden, wo er dann in den Kompensationskörper 71 eingreift.

Anschließend wird der Achskörper 82 durch den Montagekanal 28 eine Lageraufnahme 83 des Übertragungskörpers 73 durchsetzend in die Lageraufnahme 80 eingebracht. Sodann wird der Grundbacken 35 eines jeweiligen Backens 31, 32 und 33 in der Backenführung 40 angeordnet, so dass der Lagervorsprung 75 in Eingriff mit der Lageraufnahme 76 gelangt.

Gleichzeitig wird dadurch auch eine Kopplung des Antriebsarms 52 des Spannhebels 51 mit dem Backen 31, 32 oder 33 hergestellt, der sozusagen von unten her in die Backenführung 40 vorsteht und somit in Eingriff mit dem Grundbacken 35 gelangen kann.

## Patentansprüche

1. Spannfutter (10) mit einem Futterkörper (11), der eine zur Verbindung mit einem Drehantrieb (91) einer Bearbeitungsmaschine (90) vorgesehene Antriebsseite (12) und eine zur Anordnung eines Werkstücks (100), insbesondere eines Eisenbahnrads (103), vorgesehene Werkstückseite (13) aufweist, wobei die Antriebsseite (12) und die Werkstückseite (13) in Bezug auf eine Längsachse (L) an einander entgegengesetzten Seiten des Futterkörpers (11) angeordnet sind, wobei die Längsachse (L) einer Drehachse (D) entspricht, um die das Spannfutter (10) durch den Drehantrieb (91) antreibbar ist, wobei das Spannfutter (10) eine Spanneinrichtung (30) mit zwischen einer Spannstellung (SP), in der die Spanneinrichtung (30) das Werkstück (100) an dem Spannfutter (10) verspannt, und einer Lösestellung (LP), in der die Spanneinrichtung (30) das Werkstück (100) freigibt, verstellbaren Backen (31-33) aufweist, die an an der Werkstückseite (13) in Winkelabständen um die Längsachse (L) angeordneten Backenführungen (40) zwischen der Lösestellung (LP) und der Spannstellung (SP) geführt sind und durch einen von der Antriebsseite (12) her antreibbaren Spannantriebskörper (34) zwischen der Lösestellung (LP) und der Spannstellung (SP) antreibbar sind, wobei zwischen einem jeweiligen Backen (31-33) und dem Spannantriebskörper (34) ein Hebelgetriebe (50) angeordnet ist, welches eine Antriebsbewegung des Spannantriebskörpers (34) in eine Spannbewegung des jeweiligen Backens (31-33) zwischen der Lösestellung (LP) und der Spannstellung (SP) überträgt, wobei ein jeweiliges Hebelgetriebe (50) einen Spannhebel (51) umfasst, der in einer Hebelaufnahme (15) des Futterkörpers (11) aufgenommen und anhand eines an der Hebelaufnahme (15) angeordneten Hebel-Schwenklagers (54) schwenkbar gelagert ist, das zwischen einem mit dem Spannantriebskörper (34) gekoppelten Antriebsarm (52) des Spannhebels (51) und einem mit dem Backen (31-33) gekoppelten Abtriebsarm (53) des Spannhebels (51) angeordnet ist, **dadurch gekennzeichnet, dass** die Hebelaufnahme (15) eine an der Werkstückseite (13) und/oder einem sich um die Längsachse (L) erstreckenden Außenumfang (14) des Futterkörpers (11) angeordnete Hebel-Montageöffnung (17, 17B) aufweist, durch die der Spannhebel (51) in die Hebelaufnahme (15) einführbar und in der Hebelaufnahme (15) montierbar ist.

2. Spannfutter (10) nach Anspruch 1, **dadurch gekennzeichnet, dass** die Hebel-Montageöffnung (17) an der Backenführung (40) des jeweiligen Backens (31-33) angeordnet ist und/oder dass die Hebel-Montageöffnung (17) in einer Nut der Backenführung (40) angeordnet ist, in die der Backen (31-33) eingreift und/oder die sich zwischen Führungsschienen und/oder Führungskonturen der Backenführung (40) erstreckt, an denen der Backen (31-33) geführt ist.

3. Spannfutter (10) nach Anspruch 1 oder 2, **dadurch gekennzeichnet, dass** einem jeweiligen Hebel-Schwenklager (54) ein Montagekanal (19) zugeordnet ist, der sich bis zu dem Außenumfang (14) des Futterkörpers (11) erstreckt, wobei ein Lagerachskörper zum schwenkbaren Lagerung des Spannhebels (51) durch den Montagekanal (19) in den Futterkörper (11) von dessen Außenumfang (14) her einführbar oder eingeführt ist.

4. Spannfutter (10) nach einem der vorhergehenden Ansprüche, **dadurch gekennzeichnet, dass** der Abtriebsarm (53) des Spannhebels (51) mit dem Backen (31-33) anhand eines Abtrieb-Schwenklagers (56) schwenkbar und/oder eines Abtrieb-Schiebelagers (57A) verschieblich gekoppelt ist und/oder der Antriebsarm (52) des Spannhebels (51) mit dem Spannantriebskörper (34) anhand eines Antrieb-Schwenklagers (60) schwenkbar und/oder eines Antrieb-Schiebelagers (61A) verschieblich gekoppelt ist.

5. Spannfutter (10) nach einem der vorhergehenden Ansprüche, **dadurch gekennzeichnet, dass** das Antrieb-Schiebelager (61A) einen an dem Spannantriebskörper (34) in einer Antrieb-Schiebeaufnahme (61) verschieblich aufgenommenen Antrieb-Schiebelagerkörper (62) (61A) aufweist, wobei das Antrieb-Schwenklager (60) den Antrieb-Schiebelagerkörper (62) (61A) und den Antriebsarm (52) des Spannhebels (51) schwenkbar koppelt.

6. Spannfutter (10) nach einem der vorhergehenden Ansprüche, **dadurch gekennzeichnet, dass** der Abtriebsarm (53) und der Antriebsarm (52) zueinander winkelig, insbesondere rechtwinkelig, sind und/oder dass das Abtrieb-Schiebelager (57A) einen an dem Backen (31-33) in einer Abtrieb-Schiebeaufnahme (57) verschieblich aufgenommenen Abtrieb-Schiebelagerkörper (58) aufweist, wobei das Abtrieb-Schwenklager (56) den Backen (31-33) und den Abtriebsarm (53) des Spannhebels (51) schwenkbar koppelt.

7. Spannfutter (10) nach einem der vorhergehenden Ansprüche, **dadurch gekennzeichnet, dass** die Spanneinrichtung (30) mindestens eine einem Backen (31-33) zugeordnete Fliehkraft-Kompensationseinrichtung (70), insbesondere für jeden Backen (31-33) eine Fliehkraft-Kompensationseinrichtung (70), aufweist, wobei die Fliehkraft-Kompensationseinrichtung (70) eine durch den Backen (31-33) bei einer Rotation des Spannfutters (10) um seine Drehachse (D) erzeugte und in die Lösestellung (LP) gerichtete Fliehkraft (FK) zumindest teilweise im Sinne einer Belastung des Backens (31-33) in Richtung der Spannstellung (SP) kompensiert.

8. Spannfutter (10) nach Anspruch 7, **dadurch gekennzeichnet, dass** die Fliehkraft-Kompensationseinrichtung (70) einen Kompensationskörper (71) aufweist, der in einer Führungsaufnahme (72) des Futterkörpers (11) radial bezüglich der Drehachse (D) oder mit einer bezüglich der Drehachse (D) radialen Bewegungskomponente verschieblich gelagert ist und anhand eines Übertragungskörpers (73) mit dem Backen (31-33) bewegungsgekoppelt ist, wobei der Übertragungskörper (73) in einer Übertragungskörper-Lageraufnahme (26) des Futterkörpers (11) beweglich, insbesondere schwenkbar, gelagert ist.

9. Spannfutter (10) nach Anspruch 7 oder 8, **dadurch gekennzeichnet, dass** am Außenumfang (14) oder an der Werkstückseite (13), insbesondere an der Backenführung (40), vorzugsweise an oder in einer Nut (41) der Backenführung (40), eine Übertragungskörper-Montageöffnung (27) angeordnet ist, durch die der Übertragungskörper (73) in die Übertragungskörper-Lageraufnahme (26) einführbar oder eingeführt ist, und/oder dass der Übertragungskörper (73) in der Übertragungskörper-Lageraufnahme (26) anhand eines Übertragungskörper-Schwenklagers (81) schwenkbar gelagert ist, wobei ein erster von dem Übertragungskörper-Schwenklager (81) abstehender Arm (74) mit dem Backen (31-33) schwenkbar und/oder verschieblich verbunden ist und ein zweiter, entgegengesetzt zu dem ersten Arm (74) von dem Übertragungskörper-Schwenklager (81) abstehender Arm (77) mit dem Kompensationskörper (71) schwenkbar und/oder verschieblich verbunden ist.

10. Spannfutter (10) nach einem der Ansprüche 7 bis 9, **dadurch gekennzeichnet, dass** der Übertragungskörper (73) und/oder der Kompensationskörper (71) und/oder ein Achskörper (82) zur schwenkbaren Lagerung des Übertragungskörpers (73), insbesondere ausschließlich, anhand von Montageöffnungen an dem Futterkörper (11) montiert sind, die an der Werkstückseite (13) und/oder am Außenumfang (14) des Futterkörpers (11) angeordnet sind, und/oder dass das Übertragungskörper-Schwenklager (81) einen Achskörper zum schwenkbaren Lagern des Übertragungskörpers (73) umfasst, der anhand einer Montageöffnung an der Werkstückseite (13) oder dem Außenumfang (14) in den Futterkörper (11) einbringbar oder eingebracht ist.

11. Spannfutter (10) nach einem der vorhergehenden Ansprüche, **dadurch gekennzeichnet, dass** mindestens eine Komponente oder alle Komponenten der Spanneinrichtung (30), insbesondere der Hebelgetriebe (50) und/oder der Fliehkraft-Kompensationseinrichtung (70), ausschließlich durch Montageöffnungen, die an der Werkstückseite (13) oder am Außenumfang (14) des Futterkörpers (11) angeordnet sind, am Futterkörper (11) montierbar oder montiert sind und/oder dass der Futterkörper (11) an der Antriebsseite (12) in Bezug auf Komponenten der Spanneinrichtung (30) vollständig geschlossen ist und/oder der Futterkörper (11) einstückig oder monolithisch ist und/oder der Futterkörper (11) an der Antriebsseite (12) mindestens einen Zentrierrand oder eine Zentrierkontur und/oder einen Zentrierflansch zur unmittelbaren Zentrierung an einer Drehantriebshalterung (91) des Drehantriebs (91) der Bearbeitungsmaschine (90) und/oder mindestens eine Dichtkontur, insbesondere eine Labyrinth-Dichtkontur zu einer abgedichteten Befestigung an der Drehantriebshalterung (91) der Bearbeitungsmaschine (90) aufweist.

12. Spannfutter (10) nach einem der vorhergehenden Ansprüche, **dadurch gekennzeichnet, dass** der Spannantriebskörper (34) mit einem insbesondere hydraulischen Linearantrieb oder Spannantriebs (93) gekoppelt oder koppelbar ist und/oder in einer Antriebsaufnahme (25) des Futterkörpers (11) linear verschieblich aufgenommen ist und/oder zum Antreiben aller Backen (31-33) mit den Backen (31-33) bewegungsgekoppelt ist.

13. Spannfutter (10) nach einem der vorhergehenden Ansprüche, **dadurch gekennzeichnet, dass** an der Antriebsseite (12) eine Antriebsöffnung (22) zum Antreiben des Spannantriebskörpers (34) angeordnet ist, wobei die Antriebsöffnung (22) durch einen geschlossenen kreisringförmigen oder ringförmigen Ringabschnitt (23) der Antriebsseite (12) des Futterkörpers (11) oder Ringkörper (24) begrenzt ist und die Antriebsarme (52) der Spannhebel (51) zwischen dem ringförmigen Ringabschnitt (23) oder Ringkörper (24) und der Werkstückseite (13) mit dem Spannantriebskörper (34) gekoppelt sind.

14. Spannfutter (10) nach einem der vorhergehenden Ansprüche, **dadurch gekennzeichnet, dass** der Futterkörper (11) an der Werkstückseite (13) in seinem von der Drehachse (D) durchsetzten Zentralbereich (11Z) im Wesentlichen geschlossen ist oder einen ringförmigen Abschnitt aufweist, der ringförmig geschlossen nach radial außen über eine Antriebsaufnahme (25) für den Spannantriebskörper (34) vorsteht und/oder einstückig einen Boden (25A) einer Antriebsaufnahme (25) für den Spannantriebskörper (34) bildet, der die Antriebsaufnahme (25) zur Werkstückseite (13) zumindest teilweise verschließt.

15. Bearbeitungsmaschine mit einem Spannfutter (10) nach einem der vorhergehenden Ansprüche.
